# EUROPÄISCHE PATENTSCHRIFT

(11) **EP 3 033 538 B1**
(45) Veröffentlichungstag und Bekanntmachung des Hinweises auf die Patenterteilung: **31.10.2018**
(21) Anmeldenummer: 14753206.3
(22) Anmeldetag: 14.08.2014
(51) Int. Cl.: F16D 65/097

(54) **BELAGHALTEFEDER EINES BREMSBELAGS UND BREMSBELAGHALTERUNG FÜR EINE SCHEIBENBREMSE EINES KRAFTFAHRZEUGS**
LINING RETAINING SPRING FOR A BRAKE LINING AND BRAKE LINING RETAINER FOR A DISC BRAKE ON A MOTOR VEHICLE
RESSORT DE RETENUE D'UNE GARNITURE DE FREIN ET ÉLÉMENT DE RETENUE DE GARNITURE DE FREIN POUR FREIN À DISQUE D'UN VÉHICULE AUTOMOBILE

(30) Priorität: 16.08.2013 DE 102013013686
(43) Veröffentlichungstag der Anmeldung: 22.06.2016
(73) Patentinhaber: KNORR-BREMSE Systeme für Nutzfahrzeuge GmbH, 80809 München (DE)
(72) Erfinder: GASSLBAUER, Franz, 84381 Johanniskirchen (DE)
(86) Internationale Anmeldenummer: PCT/EP2014/002248
(87) Internationale Veröffentlichungsnummer: WO 2015/022081

(56) Entgegenhaltungen:
- EP-A2- 2 050 978
- DE-A1- 3 839 957
- DE-A1-102005 037 483
- DE-A1-102007 016 393

## Beschreibung

Die vorliegende Erfindung betrifft eine Bremsbelaghalterung für eine Scheibenbremse eines Kraftfahrzeuges gemäß dem Oberbegriff des Anspruchs 1.

lAus dem Stand der Technik bekannte Bremsbelaghalterungen von Bremsbelagsystemen weisen beidseitig einer Bremsscheibe zugeordnete Bremsbeläge mit einem Reibbelag und einer den Reibbelag tragenden Belagträgerplatte auf, die radial federbelastet durch Belaghaltefedern gesichert in einem Belagschacht eines ortsfesten Bremsträgers mit die Bremsbeläge seitlich einfassenden einlaufseitigen und auslaufseitigen Bremsträgerhörnern gehalten sind.

Eine gattungsgemäße Bremsbelaghalterung mit einer Belaghaltefeder ist beispielsweise aus der DE 40 20 287 A1 bekannt. Dabei ist die als Blattfeder ausgebildete Belaghaltefeder an aus einer Außenkante des Bremsbelagträgers auskragenden Haltelaschen am Bremsbelagträger befestigt, durch die die Belaghaltefeder sowohl in und entgegen der Drehrichtung der Bremsscheibe als auch radial zur Drehachse der Bremsscheibe gehalten wird.

Die Innenseiten der den Belagschacht seitlich begrenzenden Bremsträgerhörner sind üblicherweise parallel zueinander ausgerichtet, so dass ein mit zwei parallel zueinander ausgerichteten Seitenrändern ausgebildeter Bremsbelag radial von oben in den Belagschacht einführbar ist und mithilfe der Belaghaltefeder gesichert wird, die von einem Belaghaltebügel überspannt wird und so zur Stabilisierung des Bremsbelags Beschleunigungen oder Rüttelbelastungen entgegen wirkt, welche durch von außen quer zur Zuspannrichtung wirkende äußere Kräfte hervorgerufen werden.

Diese beim Bremsvorgang auf den Belag einwirkenden Querkräfte müssen über die Bremsträgerhörner an den Bremsträger eingeleitet werden. Die Abstützflächen dieser Bremsträgerhörner können jedoch in der Regel aufgrund limitierter Bauraumgegebenheiten nicht optimal ausgeführt werden, was zur Folge hat, dass der Bremsbelag bei einem Bremsvorgang unteranderem auch eine Drehbewegung ausführt. Solche Drehbewegungen können sich negativ auf das Lüftspiel, sprich den Freigang zwischen dem Bremsbelag und der Bremsscheibe, und auf das Verschleißverhalten der Bremsbeläge, beispielsweise in Gestalt eines Schrägverschleißes auswirken.

Stets erforderlich ist es, die Bremsbeläge in dem Bremsträger zuverlässig zu führen und zu fixieren, um eine sichere Funktion der Scheibenbremse zu gewährleisten.

Aus der DE 38 39 957 A1 ist eine Bremsbelaghalterung mit einer Belaghaltefeder bekannt, die radial oberhalb der Reibbeläge mittels eines Niet am Bremsbelagträger befestigt ist. Die Belaghaltefeder erstreckt sich über die gesamte der Drehachse der Bremsscheibe abgewandte Oberseite und ist an ihren beiden freien Enden zu u-förmigen Haken gebogen, die im montierten Zustand in jeweiligen Ausnehmungen der dem Bremsbelag zugewandten Innenseiten eines Bremsgehäuses aufgenommen sind.

Bei neueren Bremsbelag-Konzepten mit asymmetrisch ausgebildeten Bremsbelägen ist der Bremsbelag an einer Seitenstirnfläche über einen Formschluss einer Innenseite eins Trägerhorns des Bremsträgers geführt. Der Bremsbelag kann so bei der Montage durch eine Schwenkbewegung in den Belagschacht zwischen den Trägerhörnern eingesetzt werden, so dass die gegenüberliegende Stirnseitenfläche des Bremsbelags nach dem Einschwenken des Bremsbelags in die Arbeitsposition zwischen den Trägerhörnern radial freibeweglich vor der dem Bremsbelag zugewandten Innenseite des gegenüberliegenden Trägerhorns des Bremsträgers liegt.

Hebt dieser Bremsbelag nun aufgrund von außen quer zur Zuspannrichtung wirkenden äußeren Kräften auf die freie Seite radial nach oben ab, so vergrößert sich der Abstand des Bremsbelages zu diesem Trägerhorn, wobei der Bremsbelag in seiner Bewegung radial weg von der Bremsscheibe weder gebremst noch auf sonstige Weise aufgehalten wird.

Hier kann auch die Vorspannkraft der sich an dem Belaghaltebügel abstützenden Belaghaltefeder diese von außen einwirkenden Kräfte nicht abfangen, so dass der Bremsbelag damit einen so großen Bewegungsspielraum hat, dass er nach einer solchen Schwenkbewegung bei einem anschließenden Zurückfallen in seine Ausgangsstellung auf die Aufstandsfläche am Boden des Belagschachts aufschlägt, was zum Bruch oder zum Reißen des Reibbelags des Bremsbelags führen kann.

Aufgabe der vorliegenden Erfindung ist es, eine Bremsbelaghalterung für eine Scheibenbremse bereitzustellen, die eine Fixierung der Bremsbeläge im Bremsträger derart gewährleistet, dass eine radiale Verschwenkbewegung des Bremsbelags aus dem Belagschacht heraus weitgehend verhinderbar ist.

Diese Aufgabe wird durch eine Bremsbelaghalterung für eine Scheibenbremse eines Kraftfahrzeugs mit den Merkmalen des Anspruchs 1 gelöst.

Bei der erfindungsgemäßen Bremsbelaghalterung ist die Belaghaltefeder so ausgebildet, dass ein Teilstück dieser Belaghaltefeder sich in der montierten Stellung über den dem auslaufseitigen Bremslaufträgerhorn zugewandten Rand der Belagträgerplatte in einen Spalt zwischen dem auslaufseitigen Bremsträgerhorn und den dem auslaufseitigen Bremsträgerhorn zugewandten Seitenrand der Belagträgerplatte erstreckt, wobei ein Herausdrehen des Bremsbelags bei einem Bremsvorgang durch die Klemmwirkung des Teilstücks der Belaghaltefeder verhinderbar ist.

Dadurch ist einerseits eine einfache Montage der Belaghaltefeder am Bremsbelag sowie des Bremsbelags mit daran montierter Belaghaltefeder im Belagschacht des Bremsträgers zwischen den Bremsträgerhörner ermöglicht und andererseits nach dem Montieren der Belaghaltefeder und dem Einsetzen des Bremsbelags in den Belagschacht ein Herausdrehen des Bremsbelags bei einem Bremsvorgang durch die Klemmwirkung des Teilstücks der Belaghaltefeder auf die dem auslaufseitigen Bremsträgerhorn zugewandten Seitenrand der Belagträgerplatte des Bremsbelags verhindert.

Vorteilhafte Ausführungsvarianten der Erfindung sind Gegenstand der Unteransprüche.

Gemäß einer vorteilhaften Ausführungsvariante der Erfindung ist das Teilstück der Belaghaltefeder geradlinig ausgebildet, was eine sehr einfache Montage der Belaghaltefeder in den Spalt zwischen Belagträgerplatte und Bremsträgerhorn ermöglicht.

Denkbar ist auch, je nach Spaltbreite des Spalts zwischen Belagträgerplatte und auslaufseitigem Bremsträgerhorn eine Ausgestaltung des Teilstücks der Belaghaltefeder als zumindest teilweise wellen- oder zackenförmig quer zur Längsrichtung des Teilstücks und zur Drehrichtung des Bremsbelags, wodurch in einfacher Weise auch ein Herausdrehen des Bremsbelags aus einem Spalt mit größerer Spaltbreite zuverlässig verhinderbar ist.

Nach einer vorteilhaften Weiterbildung der Erfindung ist zwischen dem Federstück und dem Teilstück der Belaghaltefeder ein Übergangsteilstück vorgesehen, das bogenförmig ausgebildet ist und insbesondere einen Eckbereich der Belagträgerplatte bogenförmig umläuft. Dadurch ist die Montage der Belaghaltefeder in ihre Funktionsstellung nochmals erleichtert. Außerdem wird dadurch erreicht, dass infolge einer Klemmung des Teilstücks der Belaghaltefeder zwischen dem auslaufseitigen Bremsträgerhorn und der Seitenwand der Belagträgerplatte ein geringfügiges Herausdrehen des Bremsbelags nicht zu einem Lösen der Verbindung der Belaghaltefeder auf dem der Drehachse der Bremsscheibe abgewandten Rand der Belagträgerplatte führt, da das Übergangsteilstück in diesem Fall aus der bogenförmigen Gestalt mit vorgegebenem Radius in eine Form mit vergrößertem Radius verformbar ist und so den notwendigen Längenausgleich bereitstellt.

Nachfolgend werden Ausführungsbeispiele der Erfindung anhand der beiliegenden Zeichnungen näher beschrieben. Es zeigen:
- Figur 1: eine schematische Ansicht auf einen Ausschnitt einer Ausführungsvariante einer Bremsbelaghalterung mit an den Bremsbelägen angeordneter Belaghaltefeder,
- Figur 2: eine schematische Ansicht von vorne auf eine in einem Bremsträger eingesetzten Bremsbelag mit an diesem angeordneter Belaghaltefeder.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Bremsträgers, Bremsbelags, der Belaghaltefeder, des Bremsträgerhorns und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

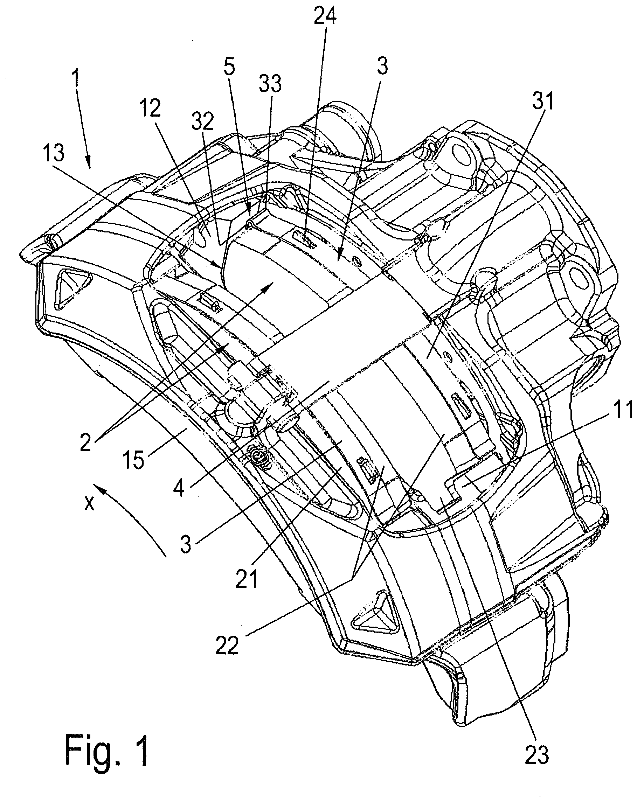

In Figur 1 ist eine prinzipielle Anordnung einer Ausführungsvariante einer erfindungsgemäßen Bremsbelaghalterung für eine Scheibenbremse, insbesondere für ein Nutzfahrzeug, gezeigt.

Dabei ist der Bremsbelag 2 mit einer Belagträgerplatte 21 und einer Reibbelag 22 in einen Belagschacht 13 eines Bremsträgers 1 eingesetzt. Der Bremsträger 1 überspannt dabei eine (nicht dargestellte) Bremsscheibe, die während der Vorwärtsfahrt des Kraftfahrzeuges, an dem sie montiert ist, sich in einer Hauptdrehrichtung X zusammen mit einer Radachse des Kraftfahrzeuges dreht.

Vorzugsweise beidseitig der Bremsscheibe sind die Bremsbeläge 2 angeordnet, die bei einem Bremsvorgang an die Bremsscheibe andrückbar sind.

Der Bremsträger 1 weist den Belagschacht 13 bildende, die Bremsbeläge 2 seitlich einfassende einlaufseitige und auslaufseitige Bremsträgerhörner 11, 12 sowie eine die Bremsträgerhörner 11, 12 miteinander verbindende Brücke 15 auf. Der Abstand zwischen den Bremsträgerhörnern 11, 12 ist dabei in Hauptdrehrichtung X der Bremsscheibe so bemessen, dass ein Bremsbelag 2, insbesondere die Belagträgerplatte 21 des Bremsbelags 2, bei der Montage zunächst mit einer ersten Seitenstirnfläche in den Belagschacht eingesetzt wird und anschließend durch eine Schwenkbewegung vollständig in den Belagschacht bewegt wird, so dass die gegenüberliegende Seitenstirnfläche 26 der Belagträgerplatte 21 des Bremsbelags 2 dem auslaufseitigen Bremsträgerhorn 12 gegenüberliegt.

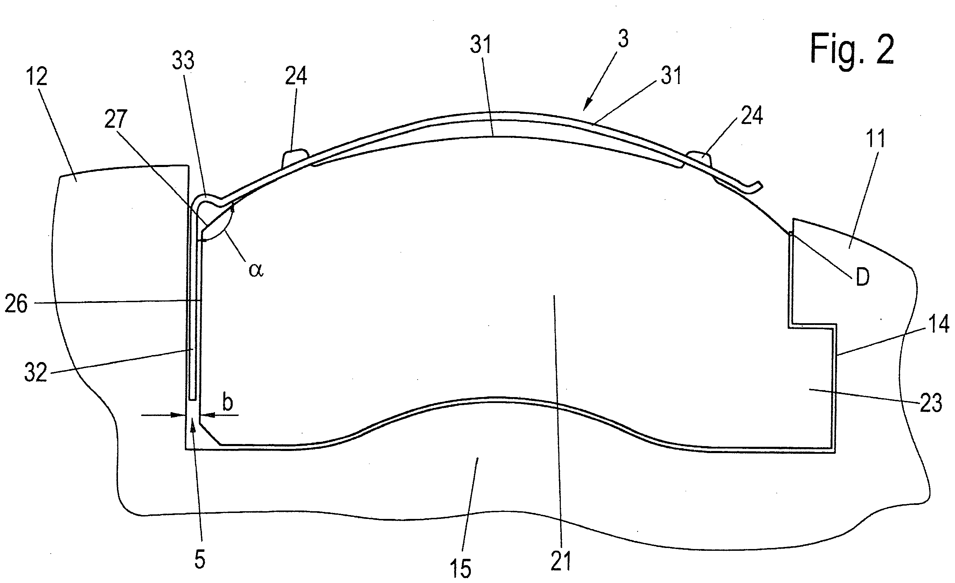

Wie in den Figuren 1 und 2 gut zu erkennen ist, weist die dem einlaufseitigen Bremsträgerhorn 11 zugewandte Seite des Bremsbelags 2 einen Vorsprung 23 auf, der im montierten Zustand des Bremsbelags 2 formschlüssig in einer Ausnehmung 14 auf der dem Bremsbelag 2 zugewandten Innenseite des Bremsträgerhorns 11 aufgenommen ist.

Um im Betrieb ein Herausdrehen des Bremsbelags 2 aus dem Belagschacht 13 nicht nur bei Vorwärtsfahrt, bei der das Herausdrehen des Bremsbelags durch den Formschluss zwischen dem Vorsprung 23 und der Ausnehmung 14 des Bremsträgerhorns 11 verhindert wird, sondern auch bei einer Rückwärtsfahrt zu verhindern, ist an dem Bremsbelag 2, insbesondere an der Belagträgerplatte 21, eine Belaghaltefeder 3 montiert, die ein auf einem der Brücke 15 des Bremsträgers 1 abgewandten Rand 25 der Belagträgerplatte 21 verliergesichert und radial auslenkbar gehaltenes Federteil 31 und ein sich an einem Ende des Federteils 31 winklig dazu erstreckendes Teilstück 32 aufweist, dass sich in der montierten Stellung, wie es in Figur 2 gezeigt ist, über den dem auslaufseitigen Bremsträgerhorns 12 zugewandten Rand der Belagträgerplatte 21 in einen Spalt 5 hinein erstreckt, der zwischen dem auslaufseitigen Bremsträgerhorn 12 und den dem auslaufseitigen Bremsträgerhorn 12 zugewandten Seitenrand 26 der Belagträgerplatte 21 nach dem Einsetzen des Bremsbelags 2 in den Belagschacht 13 vorhanden ist.

Das Federteil 31 der Belaghaltefeder 3 ist dabei auf dem der Brücke 15 abgewandten oberen Rand 25 der Belagträgerplatte 21, vorzugsweise über jeweilige Laschen 24, die aus dem Rand 25 der Belagträgerplatte 21 radial nach außen hervorstehen, in Drehrichtung der Bremsscheibe sowie radial zur Drehachse der Bremsscheibe gesichert, wobei die Belaghaltefeder 3 zentral über dem Federteil 31 von einem Belaghaltebügel 4 überspannt ist, der sich axial zur Drehachse der Bremsscheibe über den Belagschacht 13 erstreckt und an dem die Belaghaltefeder 3 sich abstützt.

Das als Klemmabschnitt ausgebildete bzw. dienende Teilstück 32 der Belaghaltefeder 3 bewirkt, dass sich der Bremsbelag 2 nicht ohne vorheriges Entfernen dieses Teilstücks 32 der Belaghaltefeder 3 aus dem Belagschacht 13 entfernen bzw. herausdrehen lässt, da der das Herausdrehen erlaubende Spalt 5 durch Einsetzen des Teilstücks 32 der Belaghaltefeder 3 soweit verengt wird, dass ein Herausdrehen des Bremsbelags 2 unterbunden ist.

In einer bevorzugten Ausführungsvariante, wie sie in Figur 2 gezeigt ist, ist dieses Teilstück 32 der Belaghaltefeder 3 geradlinig ausgebildet. Denkbar ist aber auch eine zumindest teilweise wellenförmige oder zackenförmige Ausgestaltung bzw. Formgebung dieses Teilstücks 32, quer zur Längserstreckung des Teilstücks 32 und zur Drehachse D der Schwenkbewegung des Bremsbelags 2, je nach Breite b des Spalts 5 und/oder Dicke des Materials der Belaghaltefeder 3.

Die Belaghaltefeder 3 ist, wie in den Figuren 1 und 2 dargestellt, vorzugsweise als Blattfeder ausgebildet. Neben der Ausgestaltung der Belaghaltefeder 3 als Blattfeder ist es auch denkbar, die Belaghaltefeder 3 als Drahtfeder auszubilden, wobei das Teilstück 32 der Belaghaltefeder 3 in diesem Fall beispielsweise auch spiralförmig geformt sein kann, um eine gegebenenfalls größere Breite b des Spalts 5 zur Klemmung des Bremsbelags 2 ausfüllen zu können.

Das als Klemmabschnitt ausgebildete Teilstück 32 der Belaghaltefeder 3 und das Federteil 31 ist in einer besonders bevorzugten Ausführungsvariante über ein Übergangsteilstück 33 miteinander verbunden. Dieses Übergangsteilstück 33 ist dabei bevorzugt bogenförmig ausgebildet, so dass das Federstück 31 und das gegenüber dem Federstück 31 abgewinkelte Teilstück 32 bevorzugt einen Winkel α von 70 bis 120° einschließen, je nach Geometrie des Bremsbelages 2. Das Übergangsteilstück 33 umläuft dabei bogenförmig in den Eckbereich 27 der Belagträgerplatte 21 des Bremsbelags 2.

### Bezugszeichenliste

- 1: Bremsträger
- 11, 12: Bremsträgerhörner
- 13: Belagschacht
- 14: Ausnehmung
- 15: Brücke

- 2: Bremsbelag
- 21: Belagträgerplatte
- 22: Reibbelag
- 23: Vorsprung
- 24: Nasen
- 25: Rand
- 26: Seitenstirnfläche
- 27: Eckbereich

- 3: Belaghaltefeder
- 31: Federteil
- 32: Teilstück
- 33: Übergangsteilstück

- 4: Belaghaltebügel

- 5: Spalt

- b: Breite
- D: Drehachse
- X: Hauptdrehrichtung

## Patentansprüche

1. Bremsbelaghalterung für eine Scheibenbremse eines Kraftfahrzeugs, insbesondere eines Nutzfahrzeugs, wobei beidseitig einer Bremsscheibe zugeordnete Bremsbeläge (2) jeweils in einem Belagschacht (13) eines ortsfesten Bremsträgers (1) mit die Bremsbeläge (2) seitlich einfassenden Bremsträgerhörnern (11, 12) federbelastet gelagert sind, wobei jeder der Bremsbeläge (2) mindestens einen Reibbelag (22) und eine den Reibbelag (22) tragenden Belagträgerplatte (21) und wenigstens eine auf einem einer Brücke (15) des Bremsträgers (1) abgewandten Rand (25) der Belagträgerplatte (21) verliergesichert und radial auslenkbar gehaltenen Belaghaltefeder (3) aufweist, wobei die Belagträgerplatte (21) der Bremsbeläge (2) auf einer dem einlaufseitigen Bremsträgerhorn (11) zugewandte Seite des Bremsbelags (2) einen Vorsprung (23) aufweist, der im montierten Zustand des Bremsbelags (2) formschlüssig in einer Ausnehmung (14) auf der dem Bremsbelag (2) zugewandten Innenseite des Bremsträgerhorns (11) aufgenommen ist und so im eingebauten Zustand an einem einlaufseitigen Bremsträgerhorn (11) formschlüssig gehalten ist und zur Montage mit einer ersten Seitenstirnfläche in den Belagschacht (13) einsetzbar und anschließend durch eine Schwenkbewegung vollständig in den Belagschacht (13) bewegbar ist, **dadurch gekennzeichnet, dass** ein Teilstück (32) der Belaghaltefeder (3) sich in der montierten Stellung über den dem auslaufseitigen Bremsträgerhorn (12) zugewandten Rand der Belagträgerplatte (21) in einen Spalt (5) zwischen dem auslaufseitigen Bremsträgerhorn (12) und dem dem auslaufseitigen Bremsträgerhorn (12) zugewandten Seitenrand (26) der Belagträgerplatte (21) erstreckt, wobei ein Herausdrehen des Bremsbelags (2) bei einem Bremsvorgang durch die Klemmwirkung des Teilstücks (32) der Belaghaltefeder (3) verhinderbar ist.

2. Bremsbelaghalterung nach Anspruch 1, **dadurch gekennzeichnet, dass** das Teilstück (32) der Belaghaltefeder (3) an die Kontur des dem auslaufseitigen Bremsträgerhorn (12) zugewandten Seitenrand (26) der Belagträgerplatte (21) angepasst ist.

3. Bremsbelaghalterung nach Anspruch 1 oder 2, **dadurch gekennzeichnet, dass** das Teilstück (32) der Belaghaltefeder (3) geradlinig ausgebildet ist.

4. Bremsbelaghalterung nach Anspruch 1 oder 2, **dadurch gekennzeichnet, dass** das Teilstück (32) der Belaghaltefeder (3) zumindest teilweise wellen- oder zackenförmig quer zur Längserstreckung des Teilstücks (32) und zur Drehachse (D) des Bremsbelags (2) ausgebildet ist.

5. Bremsbelaghalterung nach einem der vorstehenden Ansprüche, **dadurch gekennzeichnet, dass** ein Übergangsteilstück (33) der Belaghaltefeder (3) zwischen dem entlang dem der Brücke (15) des Bremsträgers (1) abgewandten Rand (25) der Belagträgerplatte (21) angeordneten Federstück (31) und dem in den Spalt (5) zwischen dem auslaufseitigen Bremsträgerhorn (12) und dem dem auslaufseitigen Bremsträgerhorn (12) zugewandten Seitenrand (26) der Belagträgerplatte (21) erstreckenden Teilstück (32) einen Eckbereich (27) der Belagträgerplatte (21) bogenförmig umlaufend ausgebildet ist.

6. Bremsbelaghalterung nach Anspruch 5, **dadurch gekennzeichnet, dass** das Übergangsteilstück (33) derart bogenförmig ausgebildet ist, dass das Federstück (31) und das gegenüber dem Federstück (31) abgewinkelte Teilstück (32) einen Winkel (α) von 70° bis 120° einschließen.

7. Bremsbelaghalterung nach einem der vorstehenden Ansprüche, **dadurch gekennzeichnet, dass** die Belaghaltefeder (3) als Blattfeder oder Drahtfeder ausgebildet ist.

## Claims

1. Brake lining retainer for a disc brake of a motor vehicle, in particular a commercial vehicle, wherein brake linings (2) associated on both sides with a brake disc are in each case fitted under spring load into a lining slot (13) of a positionally fixed brake carrier (1) with brake carrier horns (11, 12) that hold the brake linings (2) laterally, wherein each of the brake linings (2) has at least one friction pad (22) and a lining carrier plate (21) that supports the friction pad (22) and at least one lining retention spring (3) which is held, secured against loss and so that it can be deflected radially, on an edge (25) of the lining carrier plate (21) that faces away from a bridge (15) of the brake carrier (1), wherein on a side of the brake lining (2) that faces toward the brake carrier horn (11) on the leading-edge side the lining carrier plate (21) has a projection (23) which, in the assembled state of the brake lining (2), fits with interlock into a recess (14) on the inside of the brake carrier horn (11) that faces toward the brake lining (2) and thus, in the fitted condition, is held with interlock on a brake carrier horn (11) on the leading-edge side, and for assembly, can be inserted with a first lateral end face into the lining slot (13) and then, by virtue of a swivelling movement, can be moved completely into the lining slot (13), **characterised in that** in the assembled position a part-section (32) of the lining retention spring (3) extends over the edge of the lining carrier plate (21) that faces toward the brake carrier horn (12) on the trailing-edge side and into a gap (5) between the brake carrier horn (12) on the trailing-edge side and the lateral edge (26) of the lining carrier plate (21) facing toward the brake carrier horn (12) on the trailing-edge side, in such manner that twisting out of the brake lining (2) during a braking process is prevented by the clamping action of the said part-section (32) of the lining retention spring (3).

2. Brake lining retainer according to Claim 1, **characterised in that** the said part-section (32) of the lining retention spring (3) is shaped to fit the contour of the lateral edge (26) of the lining carrier plate (21) that faces toward the brake carrier horn (12) on the trailing-edge side.

3. Brake lining retainer according to Claims 1 or 2, **characterised in that** the part-section (32) of the lining retention spring (3) is rectilinear.

4. Brake lining retainer according to Claims 1 or 2, **characterised in that** the part-section (32) of the lining retention spring (3) is at least partially of undulating or serrated form transversely to the longitudinal extension of the said part-section (32) and to the rotation axis (D) of the brake lining (2).

5. Brake lining retainer according to any of the preceding claims, **characterised in that** a transition part-section (33) of the lining retention spring (3) between a spring section (31) arranged along the edge (25) of the lining carrier plate (21) that faces away from the bridge (15) of the brake carrier (1) and the part-section (32) that extends into the gap (5) between the brake carrier horn (12) on the trailing-edge side and the lateral edge (26) of the lining carrier plate (21) that faces toward the brake carrier horn (12) on the trailing-edge side, is shaped in an arc around a corner area (27) of the lining carrier plate (21).

6. Brake lining retainer according to Claim 5, **characterised in that** the said transition part-section (33) is curved in such manner that the spring section (31) and the part-section angled relative to the spring section (31) enclose between them an angle (α) of 70° to 120°.

7. Brake lining retainer according to any of the preceding claims, **characterised in that** the lining retention spring (3) is in the form of a leaf spring or a wire spring.

## Revendications

1. Retenue de garniture de frein pour un frein à disque d'un véhicule automobile, notamment d'un véhicule utilitaire, dans lequel des garnitures (2) de frein associées des deux côtés à un disque de frein sont montées en étant soumises à un ressort, chacune dans un puits (13) de garniture d'un support (1) de frein à poste fixe ayant des cornes (11, 12) enchâssant latéralement les garnitures (2) de frein, chaque garniture (2) de frein ayant au moins une garniture (22) de friction et une plaque (21) de porte-garniture portant la garniture (22) de friction et un ressort (3) de retenue de garniture empêché de se perdre sur un bord (25), loin d'un pontet (15) du support (1) de frein, de la plaque (21) de porte-garniture est maintenu avec possibilité de déviation radialement, la plaque (21) de porte-garniture des garnitures (2) de frein ayant, d'un côté, tourné vers la corne (11) du support du frein du côté de l'entrée, de la garniture (2) de frein, une saillie (23), qui, lorsque la garniture (2) de frein est à l'état monté, est reçue à complémentarité de forme dans un évidement (14) sur le côté intérieur, tourné vers la garniture (2) de frein, de la corne (11) du support de frein et étant ainsi à l'état monté retenue à complémentarité de forme sur une corne (11) du support de frein du côté de l'entrée et pouvant, pour le montage, être insérée par une première surface frontale latérale dans le puits (13) de garniture et ensuite être déplacée par un mouvement de pivotement pour venir complètement dans le puits (13) de garniture, **caractérisée en ce qu'**une sous-pièce (32) du ressort (3) de maintien de garniture s'étend en la position montée sur le bord, tourné vers la corne (12) du support de frein du côté de la sortie, de la plaque (21) du support de garniture dans une fente (5) entre la corne (12) du support de frein du côté de la sortie et le bord (26) latéral, tourné vers la corne (12) de support de frein du côté de la sortie, de la plaque (21) du porte-garniture, une sortie par rotation de la garniture (2) de frein, lors d'une opération de freinage, pouvant être empêchée par l'effet de serrage de la sous-pièce (32) du ressort (3) de retenue de la garniture.

2. Retenue de garniture de frein suivant la revendication 1, **caractérisée en ce que** la sous-pièce (32) du ressort (3) de retenue de la garniture est adaptée au contour de la paroi (26) latérale, tournée vers la corne (12) du support de frein du côté de la sortie, de la plaque (21) du porte-garniture.

3. Retenue de garniture de frein suivant la revendication 1 ou 2, **caractérisée en ce que** la sous-pièce (32) du ressort (3) de retenue de la garniture est rectiligne.

4. Retenue de garniture de frein suivant la revendication 1 ou 2, **caractérisée en ce que** la sous-pièce (32) du ressort (3) de retenue de la garniture est constituée, au moins en partie, sous forme ondulée ou en zigzag transversalement à l'étendue longitudinale de la sous-pièce (32) et à l'axe (D) de rotation de la garniture (2) de frein.

5. Retenue de garniture de frein suivant l'une des revendications précédentes, **caractérisée en ce qu'**une sous-pièce (33) de transition du ressort (3) de retenue de la garniture est constituée en faisant le tour en forme d'arceau d'une partie (27) de coin de la plaque (21) de support de garniture entre la pièce (31) de ressort disposée le long du bord (25), loin du pontet (15) du support (1) de frein, de la plaque (21) de porte-garniture et la sous-pièce (32) s'étendant dans la fente (5) entre la corne (12) de support de frein du côté de la sortie et le bord (26) latéral, tourné vers la corne (12) de support de frein du côté de la sortie, de la plaque (21) de porte-garniture.

6. Retenue de garniture de frein suivant la revendication 5, **caractérisée en ce que** la sous-pièce (33) de transition est constituée en forme d'arceau, de manière à ce que la pièce (31) de ressort et la sous-pièce (32) coudée par rapport à la pièce (31) de ressort fassent un angle (α) de 70° à 120°.

7. Retenue de garniture de frein suivant l'une des revendications précédentes, **caractérisée en ce que** le ressort (3) de maintien de la garniture est constitué sous la forme d'un ressort à lame ou d'un ressort à boudin.
